# EUROPEAN PATENT SPECIFICATION

(11) **EP 3 275 916 B1**
(45) Date of publication and mention of the grant of the patent: **15.12.2021**
(21) Application number: 16772633.0
(22) Date of filing: 25.03.2016
(51) Int. Cl.: C08G 61/12, C08G 16/02, C08L 65/00

(54) **POLYMER, OXIDIZED POLYMER, POLYMER COMPOSITION, GEL-TYPE POLYMER COMPOSITION, AND USE THEREOF**
POLYMER, OXIDIERTES POLYMER, POLYMERZUSAMMENSETZUNG, GELARTIGE POLYMERZUSAMMENSETZUNG UND VERWENDUNG DAVON
POLYMÈRE, POLYMÈRE OXYDÉ, COMPOSITION POLYMÈRE, COMPOSITION DE POLYMÈRE DE TYPE GEL ET LEURS UTILISATIONS

(30) Priority: 27.03.2015 JP 2015065747
(43) Date of publication of application: 31.01.2018
(73) Proprietor: Soken Chemical & Engineering Co., Ltd., Toshima-ku Tokyo 171-8531 (JP)
(72) Inventor: MIYAMOTO Takeshi, Sayama-shi Saitama 350-1320 (JP); OKAMOTO Shuji, Sayama-shi Saitama 350-1320 (JP); KOBAYASHI Fumiaki, Sayama-shi Saitama 350-1320 (JP)
(74) Representative: Gulde & Partner
(86) International application number: PCT/JP2016/059627
(87) International publication number: WO 2016/158752

(56) References cited:
- EP-A2- 0 260 541
- DE-A1-102004 033 288
- JP-A- H02 200 483
- JP-A- S63 161 024
- JP-A- 2004 186 695
- JP-A- 2011 184 635
- SHUPENG WU ET AL.: 'Grignard Metathesis Chain- Growth Polymerization for Poly(bithienylmethylene)s: Ni Catalyst Can Transfer across the Nonconjugated Monomer' MACROMOLECULES vol. 43, no. ISSUE, 25 May 2010, pages 4438 - 4440, XP055315358

## Description

### TECHNICAL FIELD

The present invention relates to an oxidized polymer, a polymer composition, a gel polymer composition and uses thereof.

### BACKGROUND ART

There are many conventional technologies using a conductive polymer as a conductivity-imparting material usable for an antistatic agent, functional capacitor, transparent electrode material and the like, or as a hole transport material usable for an organic light emitting diode (OLED), organic photovoltaics (OPV), organic semiconductor sensor and the like. The conductive polymer is composed of a combination of a main skeleton which has a conjugated structure capable of electron transfer and a dopant for doping electrons or holes to the main skeleton. As a conductive main skeleton, a skeleton having a chemical structure with an expanded π electron conjugated system, e.g., a polymer such as 3,4-ethylenedioxythiophene (EDOT), pyrrole and aniline is generally used. As a dopant corresponding to it, there are various dopants such as inorganic Lewis acid and organic protonic acid. Among them, sulfonic acid compound is generally used as the organic protonic acid.

Among the conventional technologies related to the conductive polymer, it is known that a conductive polymer having the main skeleton polyaniline to which bis 2-ethylhexylsulfosuccinic acid is doped (for example, JP 3426637 B), polyethylene dioxythiophene (PEDOT)/polystyrene sulfonic acid (PSS) having the main skeleton PEDOT to which PSS is doped, and the like.

In particular, there are many related technologies about PEDOT/PSS (for example, JP 2636968 B) which is frequently used as a general material. PEDOT/PSS is used industrially since PEDOT used as the main skeleton is highly conductive, and PEDOT/PSS can have an excellent processing suitability in which a uniform film can be easily formed by the coating of its particles which are stably dispersed in water and have a small in-water diameter with nanometer order, by adjusting molecular weight or doping amount of PSS used as the dopant, undoped sulfonic acid concentration, or the like.

### SUMMARY OF THE INVENTION

### DISCLOSURE OF THE INVENTION

The present inventors have studied use of PEDOT/PSS in an aqueous solvent system. PEDOT/PSS appeared to be dissolved in water. However, in fact, particles are aggregated, and the solution is not completely homogeneous. From this result, the inventors found the problem that it is difficult to perform coating to a fine surface or fine filling by using PEDOT/PSS in the aqueous solvent.

The present invention has been made in view of the above circumstance, and provides a polymer having an excellent solubility in a hydrophilic polar solvent and an excellent stability in the solvent.

### MEANS FOR SOLVING THE PROBLEM

According to the present invention, there is provided that an oxidized polymer being an oxide of a polymer built up from either a single structure or a mixed structure of a structural unit represented by the following chemical formula (1) and a structural unit represented by the following chemical formula (2): 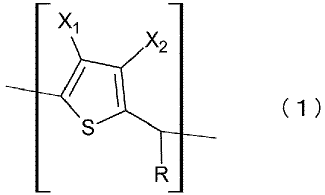 and 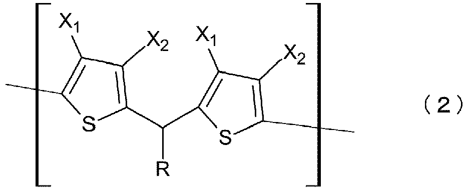
wherein X1 and X2 may be the same as or different from each other,
wherein X1 and X2 represent:
   H;
   an alkyl group having 1 to 12 carbon atoms, optionally having a substituent;
   an alkoxy group having 1 to 12 carbon atoms, optionally having a substituent;
   an alkylene oxide group having 1 to 12 carbon atoms, optionally having a substituent;
   a thiocyano group optionally having a substituent;
   an amino group optionally having a substituent; or
   a thioalkyl group optionally having a substituent, or
X1 and X2 are combined to be an alkylenedioxy group having 1 to 12 carbon atoms and being directly linked via the oxygen atoms to the thiophene moiety, optionally having a substituent, or an alkylenedithio group having 1 to 12 carbon atoms and being directly linked via the sulfur atoms to the thiophene moiety, optionally having a substituent,
wherein said optional substituents are selected from the group consisting of a straight chain, branched or cyclic alkyl group having 1 to 12 carbon atoms, a sulfo group, a hydroxyl group, a carboxyl group having 1 to 12 carbon atoms, an amino group, an amide group having 1 to 12 carbon atoms, an ester group having 1 to 12 carbon atoms, and a straight chain, branched or cyclic alkyl group having 1 to 12 carbon atoms, alkoxy alkyl group having 1 to 12 carbon atoms, and alkylene oxide group having up to 12 carbon atoms,
wherein X1 and X2 are not any of combinations of both X1 and X2 being H, of both X1 and X2 being the alkyl group having 1 to 12 carbon atoms, and of one of X1 and X2 being H with the other being the alkyl group having 1 to 12 carbon atoms, and
wherein R represents: a phenyl group having an acidic substituent or a salt thereof, wherein the acidic substituent or the salt thereof is a sulfo group or an alkali metal salt thereof, or a phosphoric acid group or an alkali metal salt thereof, and wherein the oxidized polymer is a self-doped polymer.

The present inventors studied on a polymer having an excellent solubility in a hydrophilic polar solvent, and found that, by introducing an acidic substituent into a main chain of a polymer, it can be dissolved in the hydrophilic polar solvent.

The present inventors also found that it has extremely higher impregnating ability to a porous body since it has the excellent stability in the solvent and forms a uniform solution when dissolved in the solvent.

In addition, the inventors found that when a basic additive is added to a solution of the polymer having the acidic substituent, its stability is improved and its corrosivity is reduced. Furthermore, the inventors found that, by oxidizing the polymer having the acidic substituent, higher conductivity is exhibited even in the state where the base additive is added. The inventors also found that it can also be used as a gel electrolyte by addition of a gelling agent. The present invention has been completed based on the findings.

Various embodiments of the present invention will be exemplified as follows. The following embodiments may be combined with each other.

Preferably, X1 and X2 may be the same as or different from each other, and X1 and X2 are:
the alkoxy group having 1 to 12 carbon atoms, optionally having the substituent; or
the alkylene oxide group having 1 to 12 carbon atoms, optionally having the substituent, or
X1 and X2 are combined to be the alkylenedioxy group having 1 to 12 carbon atoms, optionally having the substituent.

There is also provided a polymer composition including the oxidized polymer and a solvent.

Preferably, there is provided a polymer composition comprising the polymer composition and a base additive.

There is also provided a dried polymer composition obtained by drying the polymer composition.

There is also provided a gel polymer composition obtained by adding a gelling agent to the polymer composition.

### DETAILED DESCRIPTION OF THE INVENTION

An embodiment of the present invention will be described in detail.

The present invention relates to an oxidized polymer built up from one or two structural units selected from the group consisting of a structural unit represented by the following chemical formula (1) and a structural unit represented by the following chemical formula (2). This polymer can be used as a conductive polymer as an example, but is not limited thereto.

Firstly, a method for synthesizing a polymer usable as a conductive polymer will be described. Secondly, a method for preparing a polymer composition as an example of the conductive polymer will be described.

### <Polymer>

An oxidized polymer of the present invention is built up from one or two structural units selected from the group consisting of the structural unit represented by the following chemical formula (1) and the structural unit represented by the following chemical formula (2). 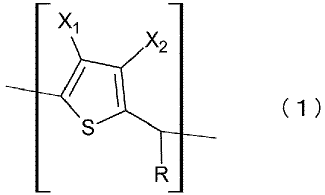 and 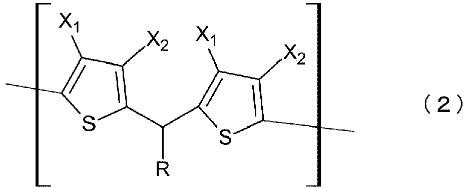
wherein X1 and X2 may be the same as or different from each other,
wherein X1 and X2 represent:
   H;
   an alkyl group having 1 to 12 carbon atoms, optionally having a substituent;
   an alkoxy group having 1 to 12 carbon atoms, optionally having a substituent;
   an alkylene oxide group having 1 to 12 carbon atoms, optionally having a substituent;
   a thiocyano group optionally having a substituent;
   an amino group optionally having a substituent; or
   a thioalkyl group optionally having a substituent, or
X1 and X2 are combined to be an alkylenedioxy group having 1 to 12 carbon atoms and being directly linked via the oxygen atoms to the thiophene moiety, optionally having a substituent, or an alkylenedithio group having 1 to 12 carbon atoms being directly linked via the sulfur atoms to the thiophene moiety, optionally having a substituent,
wherein X1 and X2 are not any of combinations of both X1 and X2 being H, of both X1 and X2 being the alkyl group having 1 to 12 carbon atoms, and of one of X1 and X2 being H with the other being the alkyl group having 1 to 12 carbon atoms, and
wherein R represents a phenyl group having an acidic substituent or a salt thereof, wherein the acidic substituent or the salt thereof is a sulfo group or an alkali metal salt thereof, or a phosphoric acid group or an alkali metal salt thereof, and
wherein the oxidized polymer is a self-doped polymer.

At least one of X1 and X2 preferably has an electron-donating group directly bonded to a heterocycle.

In X1 and X2, no limitation is applied to a substituent from the alkyl group having 1 to 12 carbon atoms, optionally having the substituent; the alkoxy group having 1 to 12 carbon atoms, optionally having the substituent; the alkylene oxide group having 1 to 12 carbon atoms, optionally having the substituent; the thiocyano group optionally having the substituent; the amino group optionally having the substituent; the thioalkyl group optionally having the substituent; the alkylenedioxy group to which X1 and X2 are combined, having 1 to 12 carbon atoms and optionally having the substituent; or the alkylenedithio group to which X1 and X2 are combined, having 1 to 12 carbon atoms and optionally having the substituent. Preferably, the substituent does not relatively inhibit an electron donating property relative to the heterocycle. Specifically, the optional substituent is a straight chain, branched or cyclic alkyl group, a sulfo group, a hydroxyl group, a carboxyl group, an amino group, an amide group, an ester group and a straight chain, branched or cyclic alkyl group, alkoxy alkyl group, alkylene oxide group substituted for the sulfo group, hydroxyl group, carboxyl group, amino group, halogen group, and may have a plurality of the substituents.

The number of carbons of the straight chain, branched, or cyclic alkyl group, the carboxyl group, the amide group, the ester group, the alkoxyalkyl group or the alkylene oxide group as the substituent is 1 to 12. Specifically, the number of the carbons is, for example, 1, 2, 3, 4, 5, 6, 7, 8, 9, 10, 11, 12, 13, 14, 15, 16, 18 or 20, and may be within a range between any two of the values exemplified above.

Although one of X1 and X2 may be hydrogen or the alkyl group having 1 to 12 carbon atoms, optionally having the substituent, it is preferable to exclude combinations of both X1 and X2 being the alkyl groups, both X1 and X2 being hydrogen, and one of X1 and X2 being hydrogen with the other being the alkyl group.

In X1 and X2, the alkylenedioxy group having 1 to 12 carbon atoms, optionally having the substituent and the alkylenedithio group having 1 to 12 carbon atoms, optionally having the substituent may have an oxygen analog, nitrogen analog, or sulfur analog structure instead of an ethylene structure in a main chain of the alkylene.

The acidic substituent of R or the salt thereof is a sulfo group or an alkali metal salt thereof, or a phosphoric acid group or an alkali metal salt thereof, preferably the sulfo group or the alkali metal salt thereof.

The phenyl group of R may have an optional substituent at any positions in addition to the acidic substituent or the salt thereof.

The optional substituent includes, for example, an alkyl group having 1 to 12 carbon atoms, an alkoxy group having 1 to 12 carbon atoms, an alkylene oxide group having 1 to 20 carbon atoms and 1 to 50 repeating units, a phenyl group, a naphthyl group, a hydroxyl group, an aldehyde group, an amino group, a cycloalkyl group having 3 to 8 carbon atoms, and the like.

### <Synthesis of Polymer>

The polymer represented by the chemical formulae (1) and (2) is obtained by polymerizing a heterocyclic compound of the chemical formula (3) and an aldehyde derivative of the chemical formula (4). 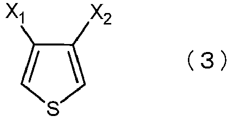 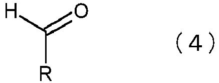 (X1 and X2 in the formula (3) and R in the formula (4) are the same as X1, X2 and R in the chemical formulae (1) and (2), respectively.)

The heterocyclic compound of the chemical formula (3) can be mainly divided into two kinds of the following chemical formulae (3-A) and (3-B). 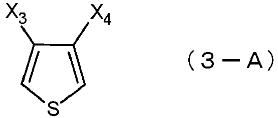 (in the formula (3-A), X3 and X4 may be the same as or different from each other, and represent: H; an alkyl group having 1 to 12 carbon atoms, optionally having a substituent; an alkoxy group having 1 to 12 carbon atoms, optionally having a substituent; an alkylene oxide group having 1 to 12 carbon atoms, optionally having a substituent; a thiocyano group optionally having a substituent; an amino group optionally having a substituent; or a thioalkyl group optionally having a substituent. In addition, X3 and X4 are not any of combinations of both X1 and X2 being H, of both X1 and X2 being the alkyl group having 1 to 12 carbon atoms, and of one of X1 and X2 being H with the other being the alkyl group having 1 to 12 carbon atoms.

Although, in X3 and X4, no limitation is applied to a substituent from: the alkyl group having 1 to 12 carbon atoms, optionally having the substituent; the alkoxy group having 1 to 12 carbon atoms, optionally having the substituent; the alkylene oxide group having 1 to 12 carbon atoms, optionally having the substituent; the thiocyano group optionally having the substituent; the amino group optionally having the substituent; or the thioalkyl group optionally having the substituent, the substituent may be the same as the substituents of X1 and X2. 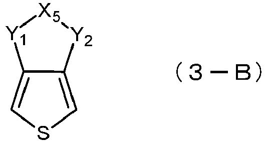 (in the formula (3-B), Y1 and Y2 represent an oxygen atom or a sulfur atom, and X5 is an alkylene group having 1 to 12 carbon atoms, optionally having a substituent and may have an oxygen analog, nitrogen analog, and sulfur analog structure instead of an ethylene structure in a main chain of the alkylene.)

Although no limitation is applied to the substituent from the alkylene group having 1 to 12 carbon atoms, optionally having the substituent in X5 may be the same as the substituents of X1 and X2.

The aldehyde derivative of the chemical formula (4) can be mainly divided into two kinds of chemical formulae (4-A) and (4-B). 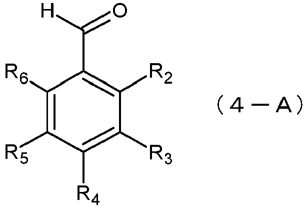 (in the formula (4-A), at least one of R2 to R6 has the acidic substituent or the salt thereof, and R2 to R6 may have a plurality of an alkyl group having 1 to 12 carbon atoms, an alkoxy group having 1 to 12 carbon atoms, an alkylene oxide group having 1 to 20 carbon atoms and 1 to 50 repeating units, an alkylene oxide group having 1 to 12 carbon atoms, a phenyl group, a naphthyl group, a hydroxyl group, an aldehyde group, an amino group, or a cycloalkyl group having 3 to 8 carbon atoms.)

### <Polymerization Reaction>

Predetermined amounts of the heterocyclic compound, the aldehyde derivative, a polymerization reaction solvent and an acid are added to a reaction vessel, and then heating and stirring are performed with inert gas enclosed. After the reaction, a reaction termination step and a purification step are carried out to obtain a polymer.

The reaction vessel can be made of glass, Teflon^{®}, or the like, but is not particularly limited thereto.

As long as the polymerization reaction of the heterocyclic compound and the aldehyde derivative proceeds, the polymerization reaction solvent includes any solvent such as ethyl acetate, tetrahydrofuran, tert-butyl methyl ether, acetonitrile, but is not particularly limited thereto.

As long as the polymerization reaction of the heterocyclic compound and the aldehyde derivative proceeds, the acid includes any acid such as perchloric acid, sulfuric acid, methanesulfonic acid, trifluoroacetic acid and p-toluenesulfonic acid, but is not particularly limited thereto.

The inert gas includes, for example, nitrogen, argon and helium.

The stirring method may be based on use of a stirrer or a shaking machine, but is not particularly limited thereto.

A stirring temperature during the polymerization reaction is 25 °C to 100 °C, preferably 40 °C to 80 °C. Specifically, this temperature is, for example, 25, 30, 40, 50, 60, 70, 80, 90 or 100 °C and may be within a range between any two of the values exemplified above.

A stirring time during the polymerization reaction is, for example, 1 to 12 hours, preferably 5 to 9 hours, but is not particularly limited thereto. Specifically, this time is, for example, 1, 2, 3, 4, 5, 6, 7, 8, 9, 10, 11 or 12 hours, and within a range between any two of the values exemplified above.

As long as the polymerization reaction can be stopped, the reaction termination step may be performed by a known method, specifically, a cooling method based on the addition of methanol, ethanol, water or the like.

As long as the polymer can be isolated, the purification step may be performed by a known method, specifically, a method for precipitating the polymer by adding a large amount of a solvent which the polymer is not dissolved, and then filtrating, washing and recrystallizing the precipitate.

The polymer having either a single structure or a mixed structure of a structural unit represented by the chemical formula (1) and a structural unit represented by the chemical formula (2) can be synthesized by the above synthesis method of the polymer.

Specifically, the proportion of the structural unit represented by the chemical formula (2) can be increased by increasing an amount of the heterocyclic compound to be used over that of the aldehyde derivative.

The proportion of the structural unit of the chemical formula (1) or the structural unit of the chemical formula (2) of the polymer is 0 to 100, preferably 10 to 90, but is not particularly limited thereto. Specifically, the proportion is, for example, 0, 10, 20, 30, 40, 50, 60, 70, 80, 90, 100, and may be within a range between any two of the values exemplified above. The above proportion may be expressed by weight% or mol%.

The number of the repeating units including the structural units of the chemical formula (1) and the chemical formula (2) in the polymer is 2 to 100, preferably 2 to 20, but is not particularly limited thereto. Specifically, the number is for example, 2, 5, 10, 20, 30, 40, 50, 60, 70, 80, 90 or 100, and may be within a range between any two of the values exemplified above.

### <Synthesis of Oxidized Polymer>

Predetermined amounts of the polymer and an oxidation reaction solvent are added to the reaction vessel, and inert gas replacement is performed, an oxidizing agent is added and then stirring is performed. After the reaction, a purification step is carried out to obtain an oxidized polymer.

The reaction vessel, the inert gas, and the stirring method may be the same as those of the polymerization reaction, but is not particularly limited thereto.

As long as the oxidation reaction proceeds, the oxidation reaction solvent may be any solvents such as water and alcohol solvents (e.g., methanol, ethanol, isopropyl alcohol, and butanol), but is not particularly limited thereto.

As long as the oxidizing reaction proceeds, the oxidizing agent may be any acid such as peroxide (e.g., ammonium peroxodisulfate (APS), sodium persulfate and potassium persulfate), hydrogen peroxide, quinone (e.g., p-benzoquinone and chloranil), iron (III) chloride, iron (III) sulfate, iron (III) hydroxide, iron (III) tetrafluoroborate, iron (III) hexafluorophosphate, copper (II) sulfate, copper (II) chloride, copper (II) tetrafluoroborate and copper (II) hexafluorophosphate, but is not particularly limited thereto.

A stirring temperature during the oxidation reaction is 0 °C to 50 °C, preferably 10 °C to 30 °C. Specifically, this temperature is, for example, 0, 10, 20, 30, 40, 50 °C and may be within a range between any two of the values exemplified above.

A stirring time during the oxidation reaction is, for example, 1 to 12 hours, preferably 1 to 5 hours, but is not particularly limited thereto. Specifically, this time is, for example, 1, 2, 3, 4, 5, 6, 7, 8, 9, 10, 11 or 12 hours, and may be within a range between any two of the values exemplified above.

As long as the polymer can be isolated, the purification step may be performed by a known method, specifically, a method having a removing step of ionic components through an ion exchange resin and a lyophilizing step.

The polymer cannot obtain conductivity under heating condition. However, the oxidized polymer can obtain the conductivity even under the heating condition.

### <Preparation of Polymer Composition>

The polymer or the oxidized polymer is added to a solvent and stirred to obtain a polymer composition.

The solvent is any solvents in which the polymer or the oxidized polymer can be dissolved and dispersed, for example, water, dimethylsulfoxide, an alcohol-based solvent such as methanol, ethanol and isopropyl alcohol, a glycol-based solvent such as methyl cellosolve, ethyl cellosolve, propylene glycol methyl ether, propylene glycol ethyl ether and ethylene glycol, and a hydrophilic polar solvent such as gamma-butyrolactone and dioxane, acetonitrile, but is not particularly limited thereto.

The stirring method may be based on the use of the stirrer or the shaker, but is not particularly limited thereto.

A stirring time during the preparation of the polymer composition is, for example, 1 to 12 hours, preferably 1 to 5 hours, but is not particularly limited thereto. Specifically, this time is, for example, 1, 2, 3, 4, 5, 6, 7, 8, 9, 10, 11 or 12 hours, and may be within a range between any two of the values exemplified above.

An amount of the solvent to be used for preparing the polymer composition is set to, for example, the amount such that a solid content is 1% to 20%, preferably 1% to 10%, but is not particularly limited thereto. Specifically, this value is, for example, 1, 2, 3, 4, 5, 6, 7, 8, 9, 10, 12, 14, 16, 18 or 20%, and may be within a range between any two of the values exemplified above.

In addition, by neutralizing the polymer composition with a base additive, it is possible to obtain a polymer composition having improved stability and reduced corrosiveness.

The base additive is any base additives capable of neutralizing the polymer composition, for example, an organic base or an inorganic base having a pKa of 9 or more as a conjugate acid in water, e.g., an amine such as ammonia, triethylamine and ethanolamine, and an alkali metal hydroxide or an alkaline earth metal hydroxide such as sodium hydroxide, potassium hydroxide and calcium hydroxide, preferably an amine having the pKa of 9 or more as the conjugate acid in water such as ammonia, trimethylamine and ethanolamine, but is not particularly limited thereto. In particular, the amine is excellent in solvent solubility and corrosiveness-reducing effect.

When dried, the polymer composition can be used as, for example, a conductive polymer. In an example, a uniform film can be made from the polymer composition when coated.

As a drying method may be a known drying method, but is not particularly limited thereto.

### <Preparation of Gel Polymer Composition>

Predetermined amounts of the polymer composition and a gelling agent are added to a reaction vessel and heated to dissolve the gelling agent. Thereafter, the mixture is cooled and then obtain a gel polymer composition.

The reaction vessel may be the same as one used in the polymerization reaction, but is not particularly limited thereto.

The gelling agent may be any gelling agents capable of forming the gel polymer composition, for example, a polymer such as polyethylene oxide, polyvinyl alcohol, polyacrylamide, polyvinyl pyrrolidone and polyvinyl butyral, gelatin, pectin, starch, and a polymer such as polyvinyl pyridine and polymethacrylate used in combination with a diamine-based crosslinking agent, which swell by absorbing the solvent, but is not particularly limited thereto.

A heating temperature for preparing the gel polymer composition is 25 °C to 100 °C, preferably 40 °C to 80 °C. Specifically, this temperature is, for example, 25, 30, 40, 50, 60, 70, 80, 90 or 100 °C, and may be within a range between any two of the values exemplified above.

A heating time for preparing the gel polymer composition is, for example, 1 to 12 hours, preferably 1 to 5 hours, but is not particularly limited thereto. Specifically, this time is, for example, 1, 2, 3, 4, 5, 6, 7, 8, 9, 10, 11 or 12 hours, and may be within a range between any two of the values exemplified above.

During the preparation of the gel polymer composition, the heating may be carried out with the stirring.

Since the polymer of the present invention is a self-doped polymer, a polymer having a small particle size can be obtained.

Furthermore, since it has higher solubility in the hydrophilic polar solvent, has very higher impregnating ability to a porous body such as a metal sintered body, and can perform fine filling or coating to a fine surface, it can also be used as the gel polymer composition by adding the gelling agent.

The polymer, oxidized polymer, polymer composition and gel polymer composition of the present invention can be suitably used for applications in fields where miniaturization is progressing, such as a antistatic agent for various applications and antistatic film using thereof, a p-type organic semiconductor, a n-type organic semiconductor, a solid electrolyte of a solid electrolytic capacitor and additive thereof, an electrochromic device, a transparent electrode of an organic photovoltaic, a counter electrode of a dye-sensitized solar cell and its adjuvant, an organic electroluminescence, a chemical sensor, a fuel cell, an electronic device such as a touch panel and a liquid crystal display, a pressure sensitive adhesive, and an additive to carbon, but is not particularly limited thereto.

### EXAMPLE

### <Synthesis of Polymer>

### Synthesis Example 1: Synthesis of Polymer 1 (not forming part of the invention)

80g EDOT, 48g sodium 2-sulfobenzaldehyde, 60g ethyl acetate and 1.5g trifluoroacetic acid were added to 300ml reaction vessel, and heated to 50 °C with stirring under nitrogen substitution. After the reaction for 7 hours, 10g methanol was added and cooled. After transferring the reaction solution to 500ml container, 200g ethyl acetate was added and stirred. Thereafter, precipitate was collected by filtration. Crystals were collected, and then dissolved in methanol/water = 90/10 to remove insoluble matter. The solution was recrystallized to obtain Polymer 1 of green crystals. Polymer 1 obtained in Synthesis Example 1 had structures of both chemical formulae (1) and (2).

### Synthesis Example 2: Synthesis of Polymer 2 (not forming part of the invention)

Polymer 1 was dissolved in ion-exchanged water such that a solid content is 2.2%. After removing Na using an ion exchange resin, lyophilization was performed to obtain Polymer 2 of green crystal.

### Synthesis Example 3: Synthesis of Polymer 3 (Oxidized Polymer according to the invention))

4.0g Polymer 1 and 100g ion-exchanged water were added to 300ml flask. The atmosphere in the flask was sufficiently substituted with nitrogen. In addition, 1.0g of APS (ammonium peroxodisulfate) was added and stirred at 25 °C for 3 hours. After treating the solution with an excess of the ion exchange resin, the lyophilization was performed to obtain Polymer 3 of blue-violet crystal.

### Synthesis Example 4: Synthesis of Polymer 4 (not forming part of the invention)

3.53g EDOT (3,4-ethylenedioxythiophene) and 25g ion-exchanged water were added to 300ml flask. The atmosphere in the flask was sufficiently substituted with nitrogen. 15.2g of 40wt% aqueous solution of 4-formyl-1,3-disulfobenzene was added and the mixture was stirred at 50 °C for 2.5 hours. After adding 125g ion-exchanged water, 3.6g APS and 10g ion-exchanged water were added, and the mixture was stirred at room temperature for 5 hours. After treatment with an excess of the ion exchange resin, the lyophilization was performed to obtain Polymer 4 of blue crystal. Polymer 4 obtained in Synthesis Example 4 had structures of both chemical formula (1) and chemical formula (2).

### Synthesis Example 5: Synthesis of Polymer 5 (not forming part of the invention)

14.2g EDOT, 5.6g benzaldehyde and 50g MEK (methyl ethyl ketone) were added to 300ml flask. The atmosphere in the flask was sufficiently substituted with nitrogen. 0.2g concentrated sulfuric acid was added, and the mixture was stirred at 50 °C for 2.5 hours. 100 g ion-exchanged water was added, 14.5g benzoyl peroxide and 20g MEK were added, and the mixture was further stirred at room temperature for 5 hours. After treatment with an excess of the ion exchange resin, vacuum distillation was performed with an evaporator to obtain Polymer 5 of brown crystal.

### Synthesis Example 6: Synthesis of Polymer 6 (not forming part of the invention)

16g polystyrene sulfonic acid aqueous solution (Mw: 75,000, solid content: 19%), 0.1g iron (III) sulfate n-hydrate and 200g ion-exchanged water were added to 300ml flask. The atmosphere in the flask was sufficiently substituted with nitrogen. 1.2g EDOT, 2.3g APS and 30g ion-exchanged water were added and stirred at 25 °C for 5 hours. After treatment with an excess of the ion exchange resin, the lyophilization was performed to obtain Polymer 6 of blue crystal.

### <Preparation of Polymer Composition>

### Preparation Example 1 (without Base Additive): Preparation of Polymer Compositions 1, 3, 5 and 7

The ion-exchanged water, DMSO (dimethylsulfoxide), EG (ethylene glycol), yBL (gamma butyrolactone) were added to Polymer 1 prepared in Synthesis Example 1 and stirred for 1 hour to obtain Polymer Compositions 1, 3, 5 and 7 having 2.0% solid content.

### Preparation Example 2 (with Base Addition): Preparation of Polymer Compositions 2, 4, 6, 8

Polymer compositions 1, 3, 5 and 7 were neutralized by addition of 20wt% aqueous ammonia solution to obtain Polymer Compositions 2, 4, 6 and 8.

### Preparation of Polymer Compositions 9 to 32

Polymer Compositions 9 to 32 were obtained in the same manner as Preparation Examples 1 and 2, except that Polymer 1 was changed to Polymers 2 to 4.

### Preparation Example 3 (without Base Additive): Preparation of Polymer Composition 33 (Comparative Example)

The ion-exchanged water was added to Polymer 5 prepared in Synthesis Example 5, and the mixture was strongly dispersed using an ultrasonic homogenizer to obtain Polymer Composition 33.

### Preparation Example 4 (with Base Additive): Preparation of Polymer Composition 34 (Comparative Example)

Polymer composition 33 was neutralized by the addition of 20wt% aqueous ammonia solution to Polymer Composition 34.

### Preparation Example 5 (without Base Additive): Preparation of Polymer Composition 35 (Comparative Example)

DMSO was added to Polymer 5 prepared in Synthesis Example 5 and stirred for a certain period to obtain Polymer Composition 35 having 2.0% solid content.

### Preparation Example 6 (with Base Additive): Preparation of Polymer Composition 36 (Comparative Example)

Polymer Composition 35 was neutralized by the addition of 20wt% aqueous ammonia solution to obtain Polymer Composition 36.

### Preparation of Polymer Compositions 37 to 44 (Comparative Example)

Polymer Compositions 37 to 44 were obtained in the same manner as Preparation Examples 1 and 2, except that Polymer 1 was changed to Polymer 6.

### Preparation Example 7 (without Base Additive): Preparation of Polymer Composition 45 (Comparative Example)

A powder obtained by lyophilizing polystyrene sulfonic acid (Mw: 75,000, nonvolatile content: 19%) was added to ethylene glycol to obtain a solution having 1.3% solid content.

### Preparation Example 8 (with Base Addition): Preparation of Polymer Composition 46 (Comparative Example)

Polymer Composition 45 was neutralized by addition of 20wt% aqueous ammonia solution to obtain Polymer Composition 46.

### Preparation Example 9: Preparation of Gel Polymer Composition 1

10g Polymer Composition 25 and 1.4g gelatin were added to 100ml flask and heated to 50 °C to completely dissolve the gelatin. This was allowed to stand at 25 °C to obtain Gel Polymer Composition 1.

### Preparation of Gel Polymer Composition 2 (Comparative Example)

Gel Polymer Composition 2 was obtained in the same manner as Preparation Example 9 except that Polymer Composition 25 was changed to Polymer Composition 45.

Table 1 shows combinations of Polymer Compositions.

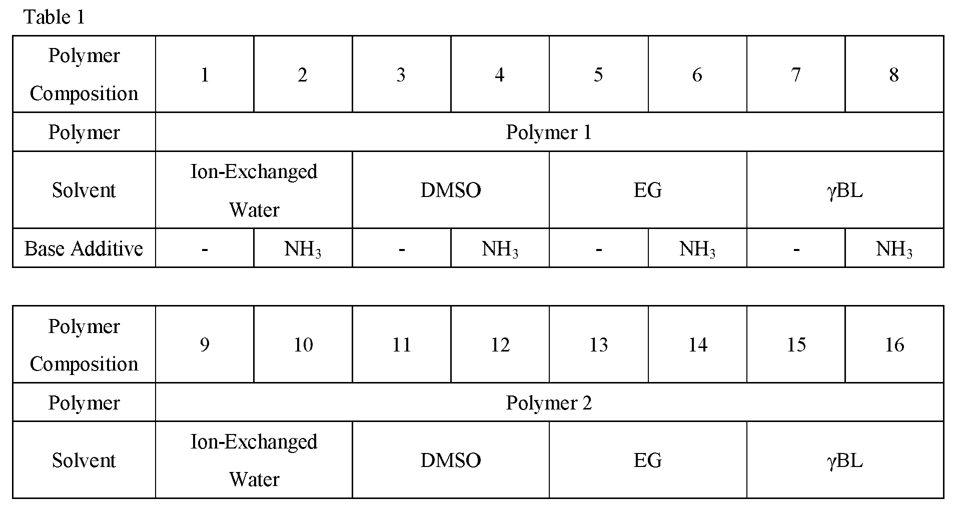

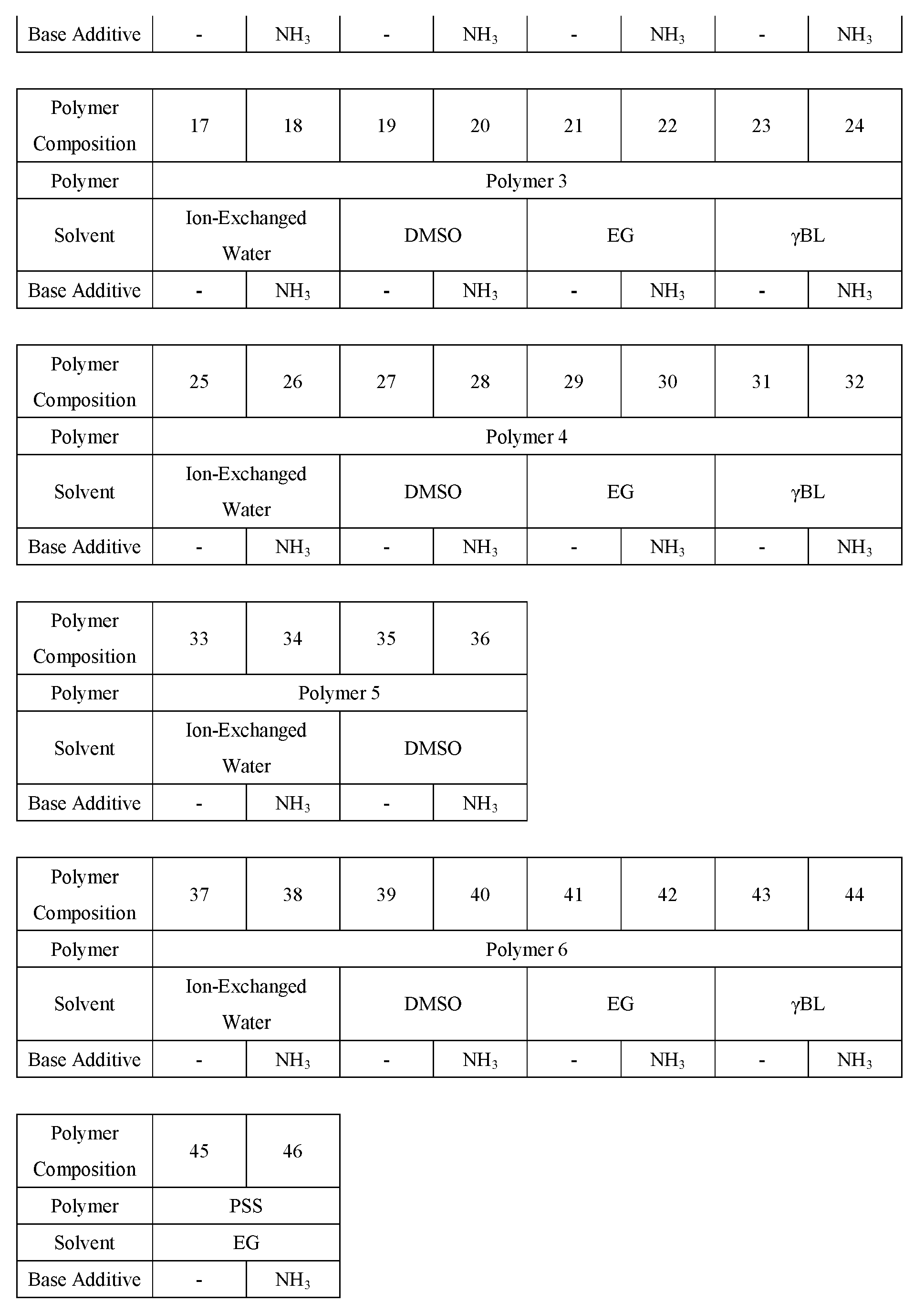

### < Method for Evaluating Solution Stability >

8g Polymer Compositions 1 to 44 immediately after preparation were added to respective 10ml containers. Each container was sealed and allowed to stand, and the presence or absence of precipitate in each container was observed. "Excellent" means a case where there was no precipitate for one or more weeks, "Good" means a case where there was no precipitate for one or more days, and "Bad" means a case where the precipitate occurs less than one day.

### < Method for Evaluating Solvent Solubility >

10ml Polymer Compositions 1 to 44 were filtered with TOMSIC membrane filters (membrane PTFE, size: 30mm, pore size: 0.45µm), and respective liquid passable amounts were measured. "Excellent" means a case where the liquid passable amount is all 10 ml, "Good" means a case where the liquid passable amount is 5 ml or more, and "Bad" means a case where the liquid passable amount is less than 5 ml.

### < Method for Evaluating Impregnation Property >

10g Polymer Compositions 1 to 44 were added to respective 100ml containers, followed by the addition of 1g activated alumina (KHO-24, manufactured by Sumitomo Chemical Co., Ltd.). After leaving for 30 minutes, the activated alumina in each container was removed and drying was performed at 105 °C for 30 minutes. The activated alumina impregnated with resin was divided in half, the cross-section thereof was observed with a CCD, and depth of the impregnation was measured.

"Excellent" means a case where the depth of the impregnation is 700µm or more, "Good" means a case where the depth of the impregnation is 400µm or more and less than 700µm, and "Bad" means a case where the depth of the impregnation is less than 400µm.

### < Method for Evaluating Coating Film Conductivity >

2cm × 2cm frames were prepared with pieces of tape on a glass plate whose surface was cleaned with isopropyl alcohol (IPA). 0.2g Polymer Compositions 1 to 44 were dropped and uniformly spread on the inside of the respective frames. After the drying at 120 °C for 30 minutes, conductivity of each Polymer Composition was measured using Loresta GP manufactured by Mitsubishi Analytech.

### <Method for Evaluating Solution Resistance Value>

Electrode terminals of a digital multimeter (MT-4090) manufactured by Mother Tool Co., Ltd. were immersed in each of Polymer Compositions 1 to 46 or each of Gel Electrolytic Compositions 1 and 2, and the solution resistance value of each composition was measured.

Tables 2 and 3 show results of evaluating the corresponding solution stability, solvent solubility, impregnation property, coating film conductivity, solution resistance value of each of Polymer Compositions 1 to 44, and results of evaluating the corresponding solution resistance value of each of Polymer Compositions 45 and 46.

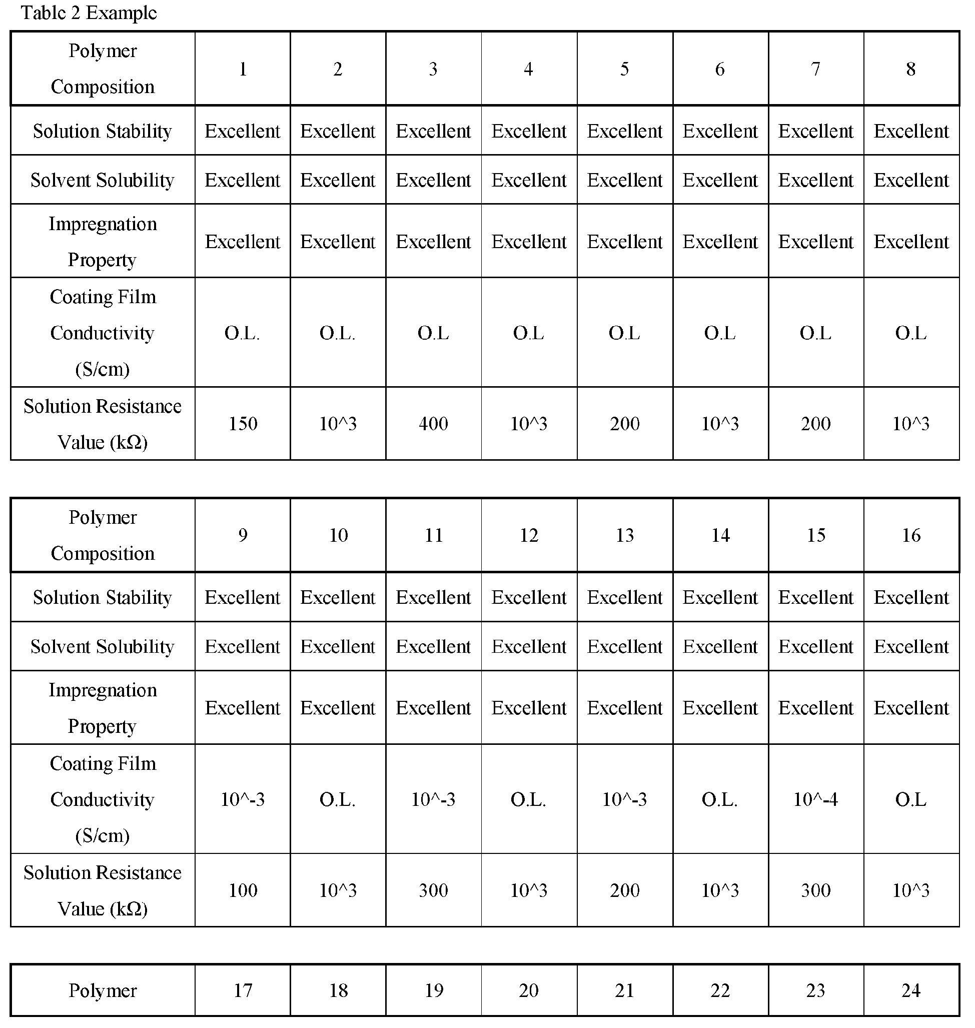

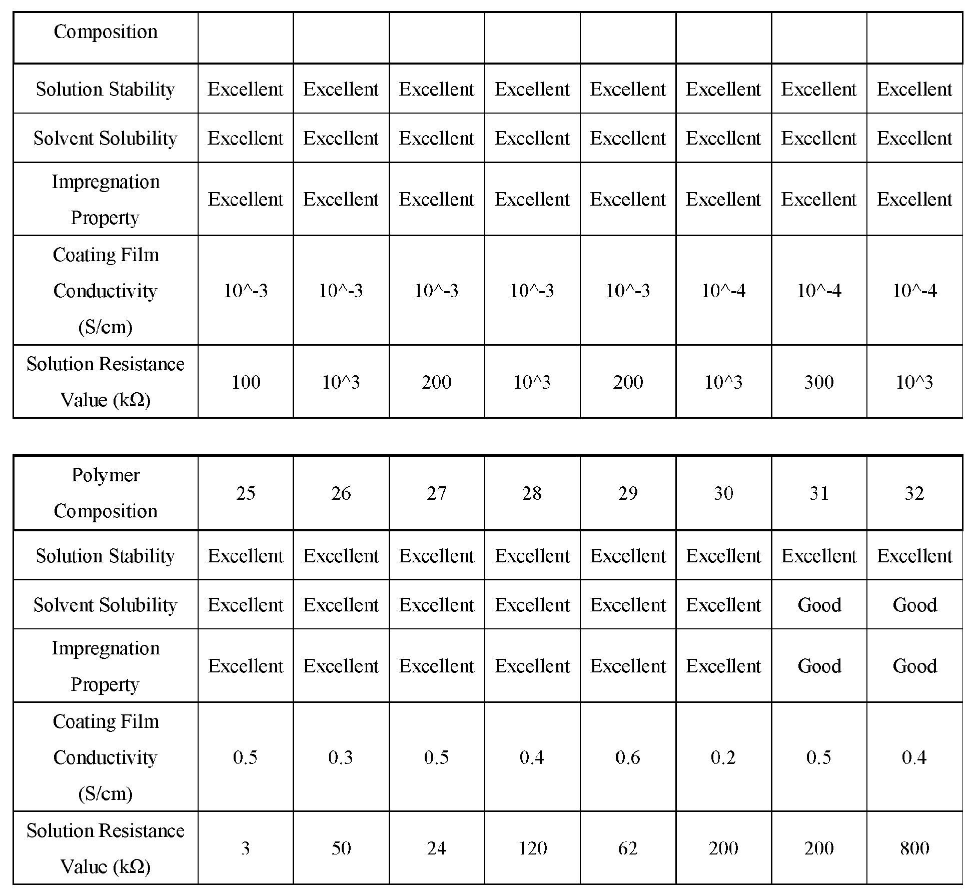

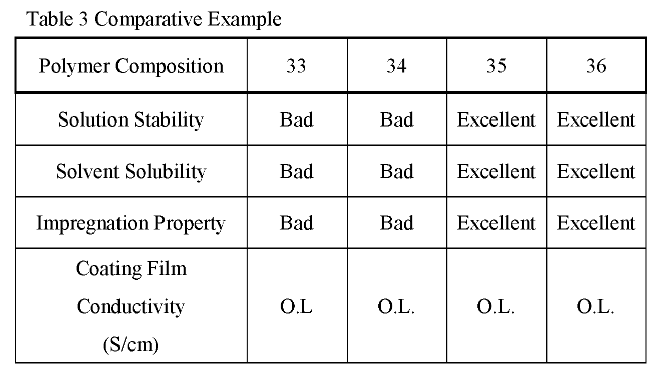

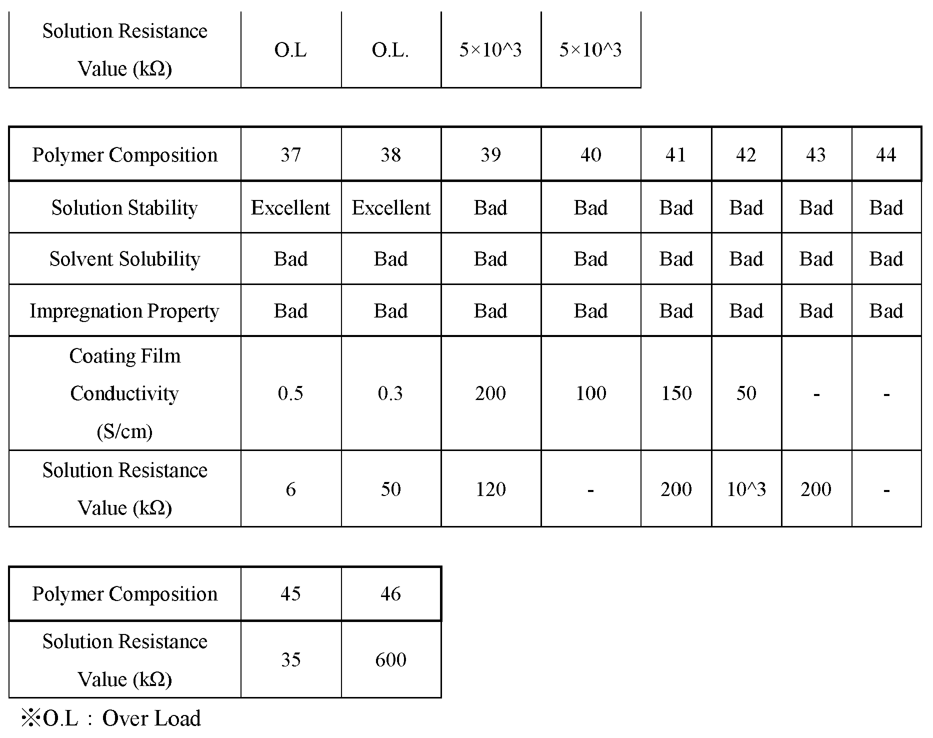

Tables 2 and 3 show that Polymer Compositions 1 to 32 exhibited satisfactory results in all of the solution stability, the solvent solubility and the impregnating property, while Polymer Compositions 33, 34 and 37 to 44 did not exhibit satisfactory results in all of the solution stability, the solvent solubility and the impregnation property. In addition, it was found that Polymer Compositions 35 and 36 exhibited satisfactory results in all of the solution stability, the solvent solubility and the impregnating property, while the solution resistance value of each of Polymer Compositions 35 and 36 was higher than that of each of Polymer Compositions 1 to 32.

Furthermore, it was found from Tables 2 and 3 that since the polymer composition of the present invention shows satisfactory results regarding the solvent solubility and the impregnating property, a particle diameter of a polymer thereof is small and highly dispersed.

Table 4 shows results of evaluating the respective solution resistance values of Gel Polymer Compositions 1 to 4.

**Table 4**

| | | |
|---|---|---|
| Gel Polymer Composition | 1 | 2 |
| Solution Resistance Value (kΩ) | 200 | 2×10^3 |

It was found from Table 4 that the resistance value of Gel Polymer Composition 2 was higher than that of Gel Polymer Composition 1.

## Claims

1. An oxidized polymer being an oxide of a polymer built up from either a single structure or a mixed structure of a structural unit represented by the following chemical formula (1): 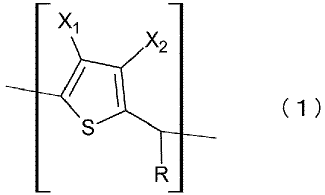 and a structural unit represented by the following chemical formula (2): 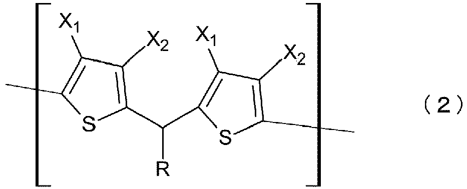
wherein X₁ and X₂ may be the same as or different from each other,
wherein X₁ and X₂ represent:
H;
an alkyl group having 1 to 12 carbon atoms, optionally having a substituent;
an alkoxy group having 1 to 12 carbon atoms, optionally having a substituent;
an alkylene oxide group having 1 to 12 carbon atoms, optionally having a substituent;
a thiocyano group optionally having a substituent;
an amino group optionally having a substituent; or
a thioalkyl group optionally having a substituent, or
X₁ and X₂ are combined to be an alkylenedioxy group having 1 to 12 carbon atoms and being directly linked via the oxygen atoms to the thiophene moiety, optionally having a substituent, or an alkylenedithio group having 1 to 12 carbon atoms and being directly linked via the sulfur atoms to the thiophene moiety, optionally having a substituent,
wherein said optional substituents are selected from the group consisting of a straight chain, branched or cyclic alkyl group having 1 to 12 carbon atoms, a sulfo group, a hydroxyl group, a carboxyl group having 1 to 12 carbon atoms, an amino group, an amide group having 1 to 12 carbon atoms, an ester group having 1 to 12 carbon atoms, and a straight chain, branched or cyclic alkyl group having 1 to 12 carbon atoms, alkoxy alkyl group having 1 to 12 carbon atoms, and alkylene oxide group having up to 12 carbon atoms,
wherein X₁ and X₂ are not any of combinations of both X₁ and X₂ being H, of both X₁ and X₂ being the alkyl group having 1 to 12 carbon atoms, and of one of X₁ and X₂ being H with the other being the alkyl group having 1 to 12 carbon atoms, and
wherein R represents a phenyl group having an acidic substituent or a salt thereof, wherein the acidic substituent or the salt thereof is a sulfo group or an alkali metal salt thereof, or a phosphoric acid group or an alkali metal salt thereof, and
wherein the oxidized polymer is a self-doped polymer.

2. The oxidized polymer according to claim 1, wherein X₁ and X₂ may be the same as or different from each other, and
wherein X₁ and X₂ are:
the alkoxy group having 1 to 12 carbon atoms, optionally having the substituent; or
the alkylene oxide group having 1 to 12 carbon atoms, optionally having the substituent, or
X₁ and X₂ are combined to be the alkylenedioxy group having 1 to 12 carbon atoms, optionally having the substituent.

3. A polymer composition comprising the oxidized polymer according to claim 1 or 2 and a solvent.

4. The polymer composition according to claim 3 further comprising a base additive.

5. A dried polymer composition obtained by drying the polymer composition according to claim 3 or 4.

6. A gel polymer composition comprising the polymer composition according to claim 3 or 4 and a gelling agent added to the polymer composition.

## Patentansprüche

1. Oxidiertes Polymer, das ein Oxid eines Polymers ist, das aufgebaut ist aus entweder einer einzelnen Struktur oder einer gemischten Struktur von einer Struktureinheit, dargestellt durch die folgende chemische Formel (1): 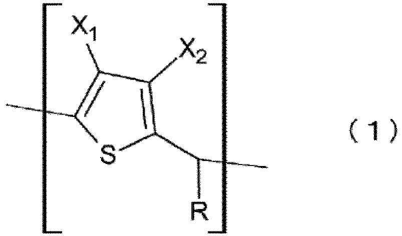 und einer Struktureinheit, dargestellt durch die folgende chemische Formel (2): 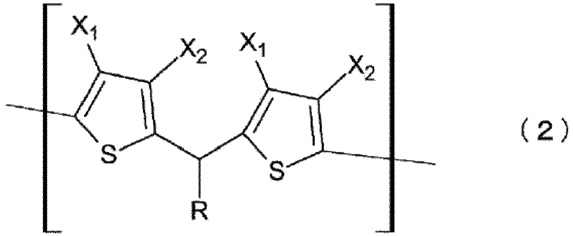
wobei X₁ und X₂ gleich oder voneinander verschieden sein können,
wobei X₁ und X₂ darstellen:
H;
einen Alkylrest mit 1 bis 12 Kohlenstoffatomen, gegebenenfalls mit einem Substituenten;
einen Alkoxyrest mit 1 bis 12 Kohlenstoffatomen, gegebenenfalls mit einem Substituenten;
einen Alkylenoxidrest mit 1 bis 12 Kohlenstoffatomen, gegebenenfalls mit einem Substituenten;
eine Thiocyanogruppe, gegebenenfalls mit einem Substituenten;
eine Aminogruppe, gegebenenfalls mit einem Substituenten; oder
einen Thioalkylrest, gegebenenfalls mit einem Substituenten, oder
X₁ und X₂ verbunden sind, um ein Alkylendioxyrest, der 1 bis 12 Kohlenstoffatome aufweist und über die Sauerstoffatome direkt an die Thiopheneinheit gebunden ist, gegebenenfalls mit einem Substituenten, oder um ein Alkylendithiorest, der 1 bis 12 Kohlenstoffatome aufweist und über die Schwefelatome direkt an die Thiopheneinheit gebunden ist, gegebenenfalls mit einem Substituenten, zu sein,
wobei die optionalen Substituenten ausgewählt sind aus der Gruppe bestehend aus einem geradkettigen, verzweigten oder cyclischen Alkylrest mit 1 bis 12 Kohlenstoffatomen, einer Sulfogruppe, einer Hydroxylgruppe, einem Carboxylrest mit 1 bis 12 Kohlenstoffatomen, einer Aminogruppe, einen Amidrest mit 1 bis 12 Kohlenstoffatomen, einem Esterrest mit 1 bis 12 Kohlenstoffatomen, und einem geradkettigen, verzweigten oder cyclischen Alkylrest mit 1 bis 12 Kohlenstoffatomen, Alkoxyalkylrest mit 1 bis 12 Kohlenstoffatomen und Alkylenoxidrest mit bis zu 12 Kohlenstoffatomen,
wobei X₁ und X₂ keine der Kombinationen sind, wobei sowohl X₁ als auch X₂ H sind, wobei sowohl X₁ als auch X₂ der Alkylrest mit 1 bis 12 Kohlenstoffatomen sind, und wobei eines von X₁ und X₂ H und das andere der Alkylrest mit 1 bis 12 Kohlenstoffatomen ist, und
wobei R eine Phenylgruppe mit einem azidische Substituenten oder einem Salz davon bedeutet, wobei der azidische Substituent oder das Salz davon eine Sulfogruppe oder ein Alkalimetallsalz davon, oder eine Phosphorsäuregruppe oder ein Alkalimetallsalz davon ist, und
wobei das oxidierte Polymer ein selbstdotiertes Polymer ist.

2. Oxidiertes Polymer nach Anspruch 1, wobei X₁ und X₂ gleich oder voneinander verschieden sein können, und
wobei X₁ und X₂ darstellen:
den Alkoxyrest mit 1 bis 12 Kohlenstoffatomen, gegebenenfalls mit dem Substituenten; oder
den Alkylenoxidrest mit 1 bis 12 Kohlenstoffatomen, gegebenenfalls mit dem Substituenten, oder
X₁ und X₂ verbunden sind, um der Alkylendioxyrest mit 1 bis 12 Kohlenstoffatomen, gegebenenfalls mit dem Substituenten, zu sein.

3. Polymerzusammensetzung, umfassend das oxidierte Polymer nach Anspruch 1 oder 2 und ein Lösungsmittel.

4. Polymerzusammensetzung nach Anspruch 3, ferner umfassend einen Basenzusatz.

5. Getrocknete Polymerzusammensetzung, erhalten durch Trocknen der Polymerzusammensetzung nach Anspruch 3 oder 4.

6. Gelpolymerzusammensetzung, umfassend die Polymerzusammensetzung nach Anspruch 3 oder 4 und ein der Polymerzusammensetzung hinzugefügtes Geliermittel.

## Revendications

1. Polymère oxydé qui est un oxyde d'un polymère construit soit à partir d'un motif structural unique, soit d'un motif structural mixte, consistant en une unité structurale représentée par la formule chimique (1) suivante : 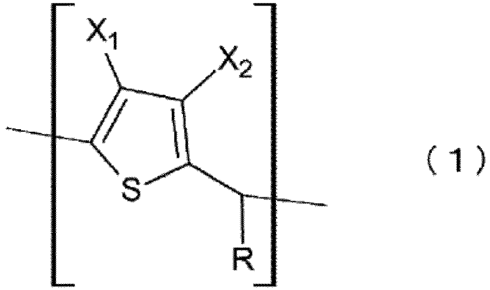 et une unité structurale représentée par la formule chimique (2) suivante : 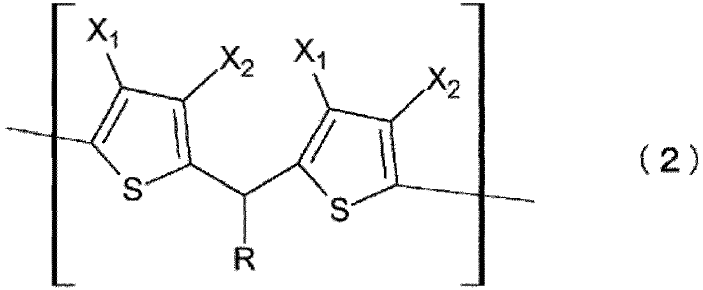
où X₁ et X₂ peuvent être identiques ou différents,
où X₁ et X₂ représentent :
un H;
un groupement alkyle à 1 à 12 atomes de carbone qui porte éventuellement un substituant ;
un groupement alkoxy à 1 à 12 atomes de carbone qui porte éventuellement un substituant ;
un groupement alkylène à 1 à 12 atomes de carbone qui porte éventuellement un substituant ;
un groupement thiocyano qui porte éventuellement un substituant ;
un groupement amino qui porte éventuellement un substituant ; ou
un groupement thioalkyle qui porte éventuellement un substituant ; ou
X₁ et X₂ sont combinés et forment soit un groupement alkylènedioxy à 1 à 12 atomes de carbone qui est directement lié au fragment thiophène par le biais des atomes d'oxygène et porte éventuellement un substituant, soit un groupement alkylènedithio à 1 à 12 atomes de carbone qui est directement lié au fragment thiophène par le biais des atomes de soufre et porte éventuellement un substituant,
où lesdits substituants facultatifs sont sélectionnés dans le groupe consistant en les suivants : groupement alkyle à 1 à 12 atomes de carbone à chaîne linéaire ou ramifiée ou cyclique, groupement sulfo, groupement hydroxyle, groupement carboxyle à 1 à 12 atomes de carbone, groupement amino, groupement amide à 1 à 12 atomes de carbone, groupement ester à 1 à 12 atomes de carbone et groupement alkyle à 1 à 12 atomes de carbone à chaîne linéaire ou ramifiée ou cyclique, groupement alkoxyalkyle à 1 à 12 atomes de carbone et groupement oxyde d'alkylène à 1 à 12 atomes de carbone,
où X₁ et X₂ ne sont pas une combinaison dans laquelle X₁ et X₂ représentent tous deux un H, dans laquelle X₁ et X₂ représentent tous deux le groupement alkyle à 1 à 12 atomes de carbone et dans laquelle un parmi X₁ et X₂ représente un H et l'autre représente le groupement alkyle à 1 à 12 atomes de carbone et
où R représente un groupement phényle qui porte un substituant acide ou un sel de celui-ci, où le substituant acide ou le sel de celui-ci est un groupement sulfo ou un sel d'un métal alcalin de celui-ci ou un groupement acide phosphorique ou un sel d'un métal alcalin de celui-ci et
où le polymère oxydé est un polymère auto-dopé.

2. Polymère oxydé selon la revendication 1, où X₁ et X₂ peuvent être identiques ou différents et
où X₁ et X₂ représentent :
le groupement alkoxy à 1 à 12 atomes de carbone qui porte éventuellement le substituant ; ou
le groupement oxyde d'alkylène à 1 à 12 atomes de carbone qui porte éventuellement le substituant ou
X₁ et X₂ sont combinés et forment le groupement alkylènedioxy à 1 à 12 atomes de carbone qui porte éventuellement le substituant.

3. Composition polymère comprenant le polymère oxydé selon la revendication 1 ou 2 et un solvant.

4. Composition polymère selon la revendication 3 comprenant en outre un additif basique.

5. Composition polymère sèche obtenue par séchage de la composition polymère selon la revendication 3 ou 4.

6. Composition polymère de type gel comprenant la composition polymère selon la revendication 3 ou 4 et un agent gélifiant ajouté à la composition polymère.
